# EUROPEAN PATENT APPLICATION

(11) **EP 4 682 623 A1**
(43) Date of publication of application: **21.01.2026**
(21) Application number: 24275087.5
(22) Date of filing: 19.07.2024
(51) Int. Cl.: G02C 9/04, G02B 27/01, G02B 7/00

(54) **MOUNT ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is disclosed a mount assembly comprising: a first part; a second part for mating with the first part; a magnetic fastener distributed between the first part and the second part and biased to hold the second part at the first part; the second part comprising at least two spherical protrusions, the first part comprising at least two recesses configured to receive the spherical protrusions, the two recesses being non-identical.

## Description

### FIELD

The present invention relates to a mount assembly, a head worn device comprising such a mount assembly, and a method of mating a first part and a second part of a mount assembly.

### BACKGROUND

Mount assemblies are used to bring parts together from a separated condition into a mated condition. Often mount assemblies involve careful visual checks to align and fasten parts together.

### SUMMARY

According to an aspect of the present invention, there is provided a mount assembly comprising: a first part; a second part for mating with the first part; a magnetic fastener distributed between the first part and the second part and biased to hold the second part at the first part; the second part comprising at least two spherical protrusions, the first part comprising at least two recesses configured to receive the spherical protrusions, the two recesses being non-identical.

The at least two recesses may comprise a frusto-conical recess, defining an opening and a floor, the opening having a greater diameter than the floor. Further, the frusto-conical recess may be configured to contact one of the spherical protrusions around the opening.

The at least two recesses may comprise a cylindrical recess, defining an opening and a floor, the opening having a substantially similar diameter to the floor. Further, the diameter of the opening and floor may be greater than the diameter of one of the spherical protrusions thereby configured to contact a distal point on the spherical protrusion at the floor.

The at least two recesses may comprise a V-shaped channel defining an opening, a taper angle, and a channel axis. Further, the channel may be configured to contact one of the spherical protrusions at a pair of contact points between a distal tip of the protrusion and its maximum diameter.

The at least two spherical protrusions may comprise three spherical protrusions and the at least two recesses comprise three recesses. Further, the three spherical protrusions may be arranged in a triangular formation, and the three recesses are arranged in a corresponding triangular formation. Still further, the magnetic fastener may be located within the triangular formation.

The first part may comprise a first shelf and the second part may comprise a corresponding second shelf, the first and second shelf being configured for guiding the second part onto the second part prior to mating. Further, the first and second shelf may be canted.

Optionally the only contact between the first part and second part, when mated, occurs between the spherical protrusions and the respective recesses.

Each spherical protrusion may comprise a portion of a sphere or spheroid. Further, each spherical protrusion may comprise a spherical dome with a height greater than the radius.

According to a further aspect, there is provided a head worn device comprising a mount assembly according to the previous aspect.

According to another further aspect, there is provided a method of mating a first part with a second part comprising: providing a magnetic fastener distributed between the first part and the second part and biased to hold the second part at the first part; providing at the second part at least two spherical protrusions, providing at the first part at least two recesses configured to receive the spherical protrusions, the two recesses being non-identical, manually bringing the first and second part into approximate alignment, releasing the first part to the bias of the magnetic fastener, confirming that the at least two spherical protrusions have keyed into the at least two recesses.

The method may further comprise providing a first shelf at the first part and a corresponding second shelf at the second shelf, and wherein bringing the first and second part into approximate alignment may comprise temporarily docking the first shelf at the second shelf.

### BRIEF DESCRIPTION OF THE FIGURES

Embodiments of the invention will now be described by way of example only with reference to the figures, in which:
Figure 1 shows parts of a mount assembly in a separated condition;
Figures 2a, 2b and 2c show a side view of the parts of Figure 1, in a mated condition;
Figure 3 shows parts of a further mount assembly integrated into a head worn display frame structure and a head worn display visor structure; and
Figure 4 illustrates the process of mating the parts of the further mount assembly;
Figures 5a, 5b and 5c show cut-away side views of the further mount assembly in a mated condition; and
Figure 6 shows a still further mount assembly integrated into a helmet and helmet module.

### DETAILED DESCRIPTION

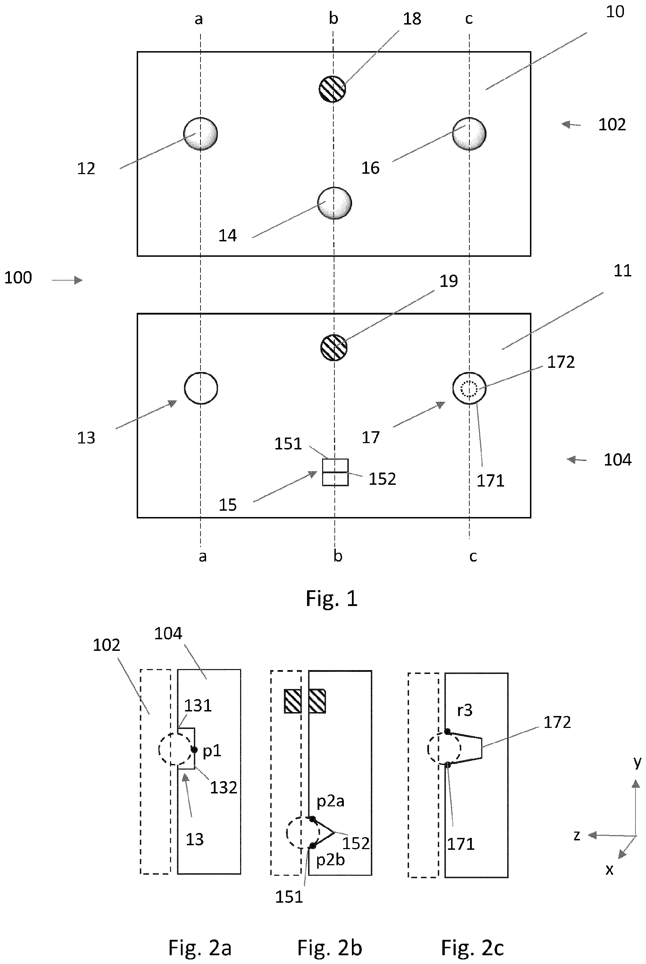

With reference to Figure 1, and also Figures 2a, 2b and 2c, there is shown generally at 100 a first mount assembly.

The mount assembly 100 comprises a first part 102 and a second part 104.

The first part 102 comprises a first rectangular plate 10 from which protrudes a first, second and third spherical protrusion 12, 14 and 16. Each spherical protrusion comprises a spherical dome, sitting proud of the plate, where the height of the dome is greater than the radius of the dome. (In variants, the height of the dome may be equal to the radius i.e. is may be a hemispherical protrusion.)

The protrusions are arranged in a triangular formation. More specifically, the protrusions define an isosceles triangle where the second protrusion is equidistant from the first and third protrusion.

The first part further comprises a first magnetic portion 18 of a magnetic fastener housed within the rectangular plate 10, and outside of the bounds of the triangular formation defined by the spherical protrusions 12, 14 and 16.

The second part 104 comprises a second rectangular plate 11 which comprises a set of recesses 13, 15, 17 corresponding with the first second and third spherical protrusions 12, 14, and 16 of the first part 102.

A first recess 13 is arranged at the second plate 11 for corresponding with the first protrusion 12, and has the form of a cylindrical recess. As such recess 13 has a circular opening 131 at the surface of the second plate 11 and a circular floor 132 at a depth within the plate 11, the opening 131 and floor 132 having substantially the same diameter.

The diameter of the opening 131 and floor 132 is configured to be greater than the maximum diameter of the spherical protrusion 12. The depth of the first recess 13 is no greater than the length of the spherical protrusion. This recess is configured such that when the first and second parts are mated, contact between the protrusion and the recess is at a single point, p1, where the distal end of the protrusion contacts the floor.

A second recess 15 is arranged at the plate for corresponding with the second protrusion 14, and has the form of a V-shaped channel. As such the second recess 15 defines a rectangular opening 151 at the surface of the second plate 11. This rectangular opening 151 tapers to a linear floor 152 that runs parallel with the axis running between the first and third recesses/protrusions. This rectangular opening 151 is configured such that, when the parts 102, 104 are mated, contact is at two points p2a, p2b with the spherical protrusion 14, which are located between the distal end of the protrusion 14 and the maximum diameter of the protrusion 14.

A third recess 17 is arranged at the plate 11 for corresponding with the third protrusion 16 and has the form of a frusto-conical recess. As such recess 17 has an opening 171 diameter and a floor 172 diameter where the opening diameter is greater than the floor diameter.

The third recess is configured such that when the parts 102, 104 are in a mated condition, there is a ring of contact r3 between the protrusion 16 and the recess 17, which is located towards the maximum diameter of the protrusion 16.

The second part 104 further comprises a second magnetic portion 19 of a magnetic fastener. This second magnetic portion 19 is located in the second plate 11 so as to correspond with the location of the first magnetic portion 18 in the first plate 10. Further the polarity of the first and second magnetic portions is such that there is an attractive magnetic force between them when the first and second parts are mated or proximate.

Figure 1 shows the first and second parts 102 and 104 in a separated condition. Lines a-a, b-b and c-c in Figure 1 show cut planes for cross sectional views. Figures 2a, 2b and 2c show cross sectional views, through these respective axes, of parts 102 and 104 brought together in a mated condition.

Figure 2a shows a cross section along cut plane a-a and as such shows the first protrusion 12 located in the first recess 13. A point of contact p1 is established between the distal end of the first protrusion 12 and the floor 132 of the recess 13. No other points of contact are shown, and the planar first and second plate surfaces are stood off from each other at a constant separation. As such the contact between the first protrusion and recess permits relatively low resistance rotation in all three axes: rotation around the roll axis (z axis) is resisted only by friction at the single point of contact, rotation around the pitch (x axis) and yaw (y axis) axes is resisted only by the rolling resistance between the spherical protrusion and the flat floor.

Figure 2b shows a cross section along cut plane b-b and as such shows the second protrusion 14 located in the second recess 15. A first and second point of contact p2a, p2b, is established between the V-shaped channel 15 and the second protrusion 14. No other points of contact are shown, and the planar first and second plate surfaces are stood off from each other at a constant separation. As such the contact between the second protrusion and second recess permits relatively low resistance rotation around the yaw axis (y axis), where the only resistance arises from the rolling resistance at the two points.

Further, Figure 2b shows the first and second magnetic portions aligned across the mount assembly. Whilst not in physical contact, they are sufficiently proximate to exert a force of magnetic attraction on one another and hence on their respective parts. Indeed, such magnetic force is predetermined to be sufficient to hold the first part and second part together.

Figure 2c shows a cross section cut along axis c-c and as such shows the third protrusion 16 located in the third recess 17. A ring of contact r3 is established between the tapered conical surface of the recess 17 and the protrusion 16. No other points of contact are shown, and the planar first and second plate surfaces are stood off from each other at a constant separation. As such the contact between the third protrusion and third recess tends to provide relatively high resistance to rotation around all three axes due to the combination of rolling resistance and friction over the ring of contact.

In operation the first and second parts 102, 104 can be manually brought from a separated condition into a mated condition by: arranging the plates to face one another at an initial separation, generally aligning the recesses with their respective protrusions, progressively reducing the separation until the attractive force between the magnetic parts guides the alignment of the magnetic parts, making adjustments as necessary to provide that the protrusions have keyed into their respective recesses.

The different mechanical resistances between the three protrusions and their respective recesses, and the different depths of contact with the protrusions can aid in smoothly guiding the parts together.

In operation the first and second parts 102, 104 can be manually brought from a mated condition into a separated condition by: gripping one or both plates; and lifting them apart (by translating one along the z-axis relative to the other) so that simultaneously all protrusions are withdrawn from their respective recesses, and the attraction of the magnetic fastener is overcome.

Alternatively separation may comprise rotating the plates relative to one another (around the z-axis, x-axis, y-axis or a combination thereof) combined with a lifting apart (translation in the z-axis).

The different mechanical resistances between the three protrusions and their respective recesses, and the different depths of contact with the protrusions can aid in smoothly guiding the parts apart.

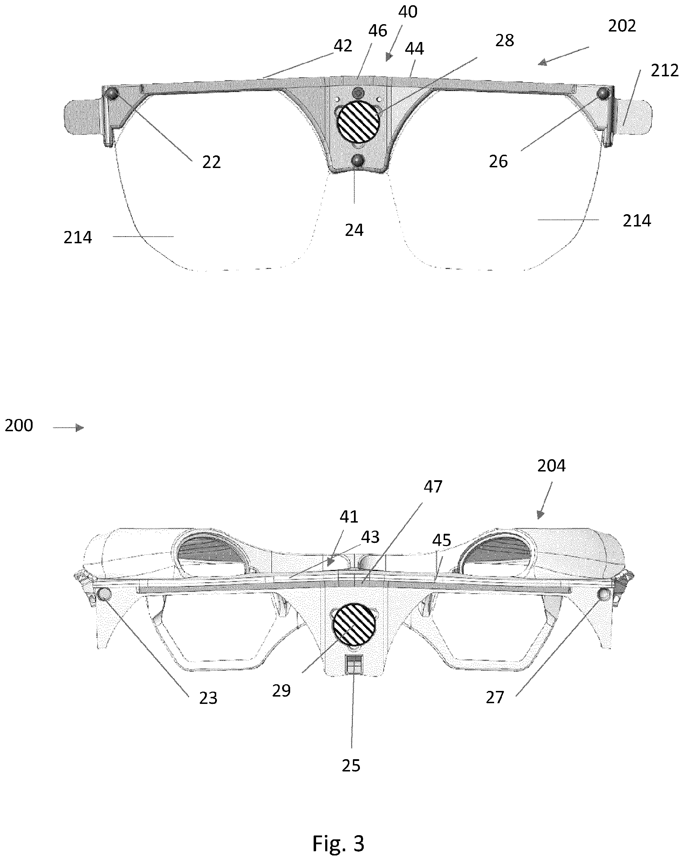

With reference to Figure 3, there is shown generally at 200 a second mount assembly distributed between a first part 202 being a visor assembly for a head worn display, and a second part 204 being a frame assembly for a head worn display. The first 202 and second 204 parts are shown in a separated condition.

The visor assembly 202 comprises a pair of transparent elements 214 and a structural portion 212 which supports the transparent elements 214. The transparent elements have the form of combiners or lenses.

The first part 202 comprises three spherical protrusions 22, 24, and 26 arranged at the structural portion 212 in a triangular formation, specifically an isosceles triangle.

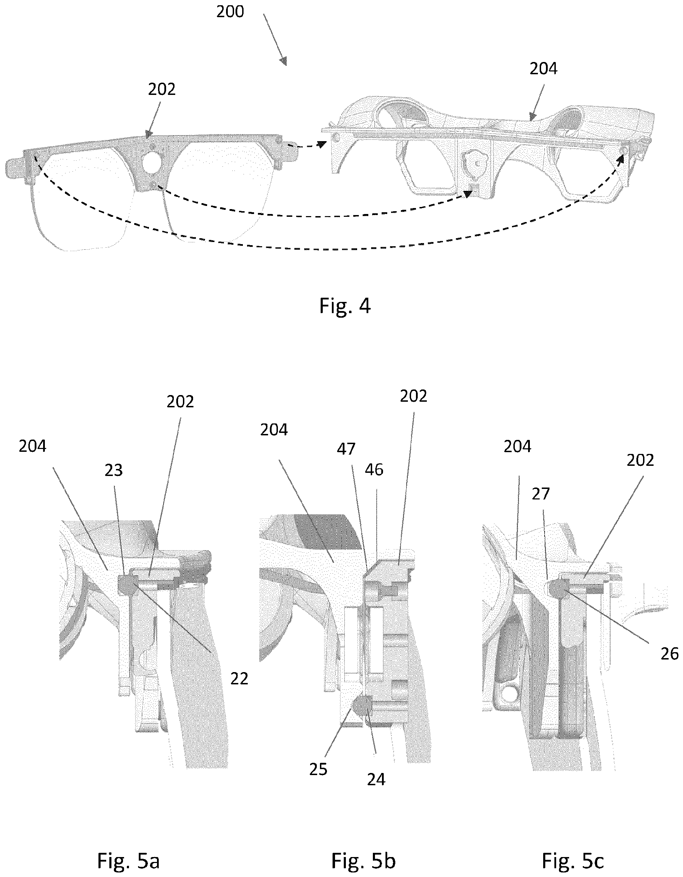

The three spherical protrusions 22, 24 and 26, further referring to Figure 5a, 5b and 5c, are formed by a spherical member (e.g. a steel ball bearing) fastener into the frame assembly such that more than half of the ball bearing protrudes from the surface of the assembly.

The first part 202 further comprises a first magnetic portion 28 of a magnetic fastener, which is located at the centre of the triangle.

The first part 202 further comprises a first inclined shelf 40 comprising a first shelf portion 42 and a second shelf portion 44. The shelf 40 extends between but not all the way up to the first and third protrusions 22, 26.

The first and second portion of the shelf are canted relative to one another, in the symmetry axis of the isosceles triangle.

Accordingly there is defined at the shelf 40 an inclined, canted first surface 46.

In relation to the surrounding first part 202 structure and given its form as a visor assembly, the first and third protrusions are located on the structural portion 212, towards the extremities thereof, and above the outer edge of respective transparent elements 214. The second protrusion 24 and the first magnetic portion 28 are located at a central section of the support member 212 and between the transparent elements 214. The shelf 40 runs above the transparent elements 214 and at the upper edge of the structural member 212.

The second part 204 comprises a first, second and third recess 23, 25 and 27. These recesses are arranged in a triangular formation corresponding to that of the protrusions 22, 24 and 26 on the first part 202.

The first recess 23 is a cylindrical recess. The second recess 25 is a V-shaped channel recess, and the third recess 27 is a frusto-conical recess.

The second part 204 further comprises a second magnetic portion 29 of a magnetic fastener. This second magnetic portion 29 is located at the centre of the triangle defined by the recesses, and thereby corresponds with the first magnetic portion 28.

The second part 204 further comprises a second inclined shelf 41 running between the first 23 and second 27 recess. The second shelf 41 is reciprocal to the first shelf 40.

The second inclined shelf 41 comprises a first portion 43 and a second portion 45 which are canted relative to one another in the line of symmetry of the isosceles triangle.

Accordingly, the second shelf 41 presents an inclined, canted second surface 47.

The first surface 46 and second surface 47 may mate along their entirety.

In relation to the surrounding second part 204 structure and given its form as a frame assembly, the first 23 and third 27 recesses are located towards the outer extremities of the assembly. The second recess 25 and the second magnetic portion 29 are located at a central section of the frame assembly. The shelf 41 juts out from the frame.

In operation, the first 202 and second 204 parts may be brought together, as generally shown in Figure 4, into a mating condition. In Figure 4 it is shown how a rotation around the yaw axis (y axis) may bring the parts together so that the respective protrusions and recesses, magnetic fastener parts, and shelf surfaces align and effect the mate.

Alternatively, the separated parts 202, 204 may be brought together by a user:
(i) manually holding the visor assembly 202 at an inclined pitch relative to the frame part 204 such that the first shelf 40 is closer to the frame part 204;
(ii) touching the first shelf 40 onto the second shelf 41 and allowing the canting of the surfaces to offer guidance;
(iii) progressively reducing the pitch to
   bring the parts under the increasing influence of the magnetic fastener
   offer up the first and second protrusions into their respective recesses; and
(iv) releasing the manual hold as all three protrusions key into their respective recesses, and the magnetic attraction between the parts combines with the friction at the contact points/rings to bear the weight of the visor assembly 202.
Such a process can be a tactile experience and so may be particularly convenient in situations where the user is already wearing the frame part 204 and therefore unable to see well the recesses or protrusions.

Figures 5a, 5b and 5c show in cross section for each of the recess protrusion pairs, the visor assembly 202 and the frame part 204 in the mating condition.

In the mating condition and as shown at Figure 5a, the first recess 23 accommodates the first protrusion 22 such that the protrusion 22 sits in the cylindrical form of recess and there is a single point of contact therebetween. More specifically, the single point of contact occurs at the centre of the flat floor of the first recess 23 and the distal tip of the spherical protrusion 22.

In the mating condition and as shown at Figure 5b, the second recess 25 accommodates the second protrusion 24. The channel, being of V-shaped channel form, contacts the protrusion 24 at two points. The first contact is at an upper planar face of the channel 25 and an upper point on the protrusion 24, the second is at a lower planar face of the channel 25 and a lower point on the protrusion 24. The upper and lower points of contact occur at the surface of the protrusion between the distal tip of the protrusion and the maximum width of the protrusion.

In the mating condition and as shown at Figure 5c, the third recess 27 accommodates the third protrusion 26. A ring of contact is between the protrusion 26 and the frusto-conical surface of the recess 27.

Besides these points of contact, the visor part 202 and the frame part 204 are physically separated, or stood off from, one another. This separation allows some movement between the parts if a sufficient force is applied, which movement can be then exploited to lever up the visor part 202 from frame part 204 to effect a separation.

For example a transition from a mated condition to a separated condition may be effected by manually gripping the visor part 202 at the bottom of the lenses; pushing out at the lenses so as to progressively increase the pitch of the visor part 202 and thereby tend to firstly bring the shelves of the parts 202, 204 into contact and to slide the second protrusion 24 out of the second recess, and later to pop the first and third protrusions out of their respective recesses whilst increasing the distance between the magnetic parts and so reducing the force of attraction therebetween.

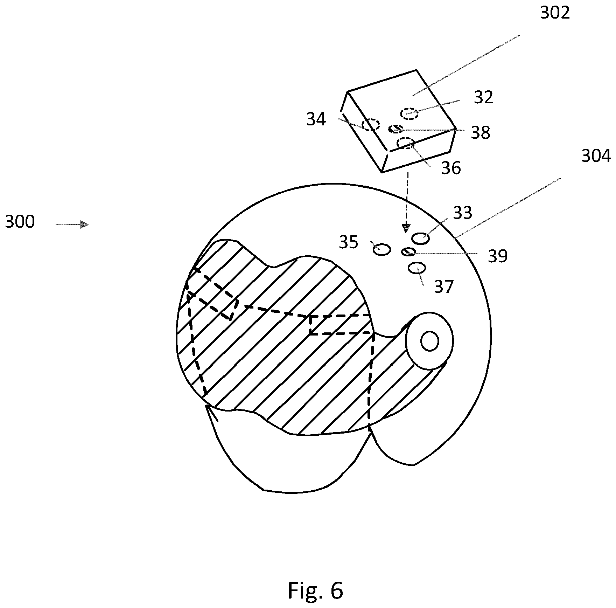

With reference to Figure 6, a mount assembly 300 is distributed between a helmet 304 and a helmet module 302.

The helmet module 304 comprises three recesses 33,35,37 at the surface of the helmet 304, which are arranged to define an equilateral triangle. At the centre of the triangle is provided a first part 39 of a magnetic fastener.

The helmet module 302 comprises spherical protrusions 32,34,36 extending from the surface of the module 302 which are arrange to correspond with the equilateral triangle defined by the recesses 33,35,37. At the centre of the triangular formation of protrusions there is provided a second part of a magnetic fastener 38.

As with the previous examples, the three recesses comprise a cylindrical recess, a v-shaped channel, and a frusto-connical recess. Each is configured to accommodate its respective protrusion at a single point of contact, a pair of points of contact, and a ring of contact respectively. The points of contact are configured such that the surfaces of the helmet and module are otherwise separated.

In operation the user, if wearing he helmet, may conveniently attach or detach the helmet module.

In order to bring the parts together from a separated condition into a mated condition, the user may:
pick up the module;
determine which surface bears the mount assembly components;
bring the mount bearing surface of the module into approximate alignment with the recesses on the helmet, such that the magnetic attraction force between the magnetic parts becomes significant enough to help guide the magnets into precise alignment;
allowing the magnets to guide the mating;
once the magnets are at an equilibrium position, applying any fine adjustments, such as a twist, to the module to key the protrusions into the recesses.

Conversely if the user wishes to remove a module that is mated with the helmet, then the user may:
Grip the module; either lift the module off directly, or perform an initial twisting motion or rocking motion to slide at least two protrusions out of their respective recesses.

## Claims

1. A mount assembly comprising:
A first part;
A second part for mating with the first part;
A magnetic fastener distributed between the first part and the second part and biased to hold the second part at the first part;
The second part comprising at least two spherical protrusions, the first part comprising at least two recesses configured to receive the spherical protrusions, the two recesses being non-identical.

2. The mount assembly according to claim 1 wherein the at least two recesses comprise a frusto-conical recess, defining an opening and a floor, the opening having a greater diameter than the floor.

3. The mount assembly according to claim 2 wherein the frusto-conical recess is configured to contact one of the spherical protrusions around the opening.

4. The mount assembly according to any of the preceding claims wherein the at least two recesses comprises a cylindrical recess, defining an opening and a floor, the opening having a substantially similar diameter to the floor.

5. The mount assembly according to claim 4 wherein the diameter of the opening and floor is greater than the diameter of one of the spherical protrusions thereby configured to contact a distal point on the spherical protrusion at the floor.

6. The mount assembly according to any of the preceding claims wherein the at least two recesses comprises a V-shaped channel defining an opening, a taper angle, and a channel axis.

7. The mount assembly according to claim 6 wherein the channel is configured to contact one of the spherical protrusions at a pair of contact points between a distal tip of the protrusion and its maximum diameter.

8. The mount assembly according to any of the preceding claims wherein the at least two spherical protrusions comprise three spherical protrusions and the at least two recesses comprise three recesses.

9. The mount assembly according to claim 8 wherein the three spherical protrusions are arranged in a triangular formation, and the three recesses are arranged in a corresponding triangular formation.

10. The mount assembly according to any of the preceding claims wherein the first part comprises a first shelf and the second part comprises a corresponding second shelf, the first and second shelf being configured for guiding the second part onto the second part prior to mating.

11. The mount assembly according to any one of the preceding claims wherein the only contact between the first part and second part, when mate, occurs between the spherical protrusions and the respective recesses.

12. The mount assembly according to any one of the preceding claims wherein each spherical protrusion comprises a portion of a sphere or spheroid.

13. The mount assembly according to claim 12 wherein each spherical protrusion comprises a spherical dome with a height greater than the radius.

14. A head worn device comprising a mount assembly according to any one of the preceding claims.

15. A method of mating a first part with a second part comprising
Providing a magnetic fastener distributed between the first part and the second part and biased to hold the second part at the first part
Providing at the second part at least two spherical protrusions,
Providing at the first part at least two recesses configured to receive the spherical protrusions, the two recesses being non-identical,
Manually bringing the first and second part into approximate alignment,
Releasing the first part to the bias of the magnetic fastener,
Confirming that the at least two spherical protrusions have keyed into the at least two recesses.
